# EUROPÄISCHE PATENTSCHRIFT

(11) **EP 3 964 877 B1**
(45) Veröffentlichungstag und Bekanntmachung des Hinweises auf die Patenterteilung: **25.09.2024**
(21) Anmeldenummer: 21186451.7
(22) Anmeldetag: 19.07.2021
(51) Int. Cl.: G02B 26/02, G02B 26/08, G02B 27/00

(54) **SPIEGEL-SHUTTER-ARRAY**
MIRROR SHUTTER ARRAY
ENSEMBLE OBTURATEUR MIROIR

(30) Priorität: 03.09.2020 DE 102020123024
(43) Veröffentlichungstag der Anmeldung: 09.03.2022
(73) Patentinhaber: Universität Kassel, 34125 Kassel (DE); Nanoscale Glasstec GmbH, 34132 Kassel (DE)
(72) Erfinder: HILLMER, Hartmut, 34128 Kassel (DE)
(74) Vertreter: Walther Bayer Faber Patentanwälte PartGmbB

(56) Entgegenhaltungen:
- EP-A1- 1 008 885
- DE-A1- 10 358 967
- KR-A- 20070 030 871
- KR-A- 20120 036 242
- US-A1- 2009 142 050
- US-A1- 2014 218 708
- US-B1- 6 639 572

## Beschreibung

Die Erfindung betrifft ein Spiegel-Shutter-Array umfassend eine Mehrzahl von Mikroelementen, welche als Mikrospiegel und/oder als Mikroshutter ausgebildet sind, wobei jedes Mikroelement einen lichtundurchlässigen Flächenkörper aufweist, welcher mittels eines randseitigen Befestigungsabschnitts scharnierartig auf einer lichtdurchlässigen Grundplatte des Spiegel-Shutter-Arrays angeordnet ist, derart, dass jedes Mikroelement zwischen einer lichtundurchlässigen geschlossenen Stellung und wenigstens einer lichtdurchlässigen geöffneten Stellung schwenkbar ist.

### STAND DER TECHNIK

Shutterarrays und Spiegelarrays, welche aus einer Vielzahl von aktuierbaren Mikroelementen in Form von Mikroshuttern oder Mikrospiegeln aufgebaut sind, gehören zu den sogenannten mikro-optoelektro-mechanischen Systemen (MOEMS) und werden zur hochaufgelösten Lichtmodulation oder Lichtlenkung in einer Vielzahl von unterschiedlichen Anwendungen als Beamerelemente (insbesondere die unter dem Markennamen Digital Light Processing bekannte Projektionstechnik von Texas Instruments Inc.), Router, Verschlüsse oder Blenden eingesetzt, beispielsweise auf den Gebieten der optischen Informationsverarbeitung, der Projektionsanzeigen, der Mikroskopie, der Endoskopie, der Lithographie, der Laserstrukturierung oder auch als Sonnenlicht leitende Elemente in Verglasungen von Gebäuden.

Bei den das Array konstituierenden Mikroelementen handelt es sich um miniaturisierte optische Elemente im Größenbereich weniger Quadratmikrometer bis Quadratmillimeter, deren Stellung, und somit lichttechnische Wirkung, mittels aktiver oder passiver Ansteuerung aktuierbar ist. Die Mikroelemente sind dabei wahlweise als rein lichtabsorbierende Mikroverschlüsse ausgebildet oder sie weisen als Mikrospiegel wenigstens eine spiegelnde Oberfläche auf. Zur Herstellung der Arrays werden typische Dünnschichtprozesse durchgeführt, insbesondere unter Einsatz von Depositionsprozessen, Lithographie- und Ätzschritten sowie Opferschichttechnologien.

Beispielsweise offenbart die DE 103 58 967 A1 ein Array in Form einer Mikrospiegelanordnung für fassadenbauliche Zwecke, bei welcher Mikrospiegelelemente in einer regelmäßigen flächigen Matrixanordnung vorliegen und einzeln oder in Gruppen über ein Adressierungsnetzwerk von einem zentralen Steuergerät angesteuert werden. Dadurch ist die Möglichkeit einer aktiven Sonnenlichtlenkung mit hoher Ortsauflösung geschaffen, welche eine bedarfsangepasste und personalisierte Beleuchtungssituation in dem hinter der Fassade liegenden Raum ermöglicht. Detaillierte Angaben zu Fertigung, Funktion und Anwendungsprinzip eines solchen Mikrospiegel-Arrays finden sich in Hillmer et al., Jpn. J. Appl. Phys. 57, 08PA07 (2018).

Die US 2009/0142050 A1 offenbart ein Shutterarray, welches die Funktion einer Irisblende ausübt. Dazu weist das Shutterarray eine Grundplatte mit einem kreisförmigen lichtdurchlässigen Abschnitt auf, über welchem eine Mehrzahl von Mikroshuttern in Form von aufrollbaren lichtundurchlässigen Blendenelementen angeordnet ist. Die Blendenelemente weisen im entrollten, d.h. geschlossenen, Zustand jeweils eine identische dreieckförmige Kontur auf und in ihrer regelmäßigen Anordnung überdeckt die Gesamtheit der Blendenelemente den lichtdurchlässigen Abschnitt der Grundplatte. Die Blendenelemente weisen einen Schichtaufbau auf, wobei die Eigenspannungen der unterschiedlichen Schichten derart beschaffen sind, dass ein Aufrollen der Blendenelemente resultiert, wobei ein elektrostatisches Aktuierungsprinzip implementiert ist, um diesem Aufrollen entgegenzuwirken und die Blendenelemente in die geschlossene Stellung zu überführen und zu halten. Dabei ist vorgesehen, sämtliche Blendenelemente gleichzeitig und gleichförmig zu aktuieren.

Die KR 2007 0030871 A offenbart eine Mikroshuttervorrichtung, hergestellt durch Verwendung eines Polymermuster als Form und umfassend ein Substrat; darauf einen ersten Isolierfilm; darauf eine untere Adresselektrode in einem vorbestimmten Muster; darauf eine zweite Isolierschicht; darauf eine obere Adresselektrode in einem vorbestimmten Muster; einen Mikroshutter, der elektrisch mit der oberen Adresselektrode verbunden ist als ein leitender Dünnfilm einer vorbestimmten Form; und eine Adressierschaltung, die mit der unteren und der oberen Adresselektrode verbunden ist.

Die US 6 639 572 B1 offenbart eine papierweiße Direktsichtanzeige mit geringem Stromverbrauch umfassend eine Anordnung von schwenkbaren Mikrospiegeln, die zwischen zwei Zuständen ausgelenkt werden, einem ersten Zustand, in dem der Mikrospiegel einen Teil des Hintergrunds abdeckt, und einem zweiten Zustand, in dem der Mikrospiegel den Hintergrund nicht abdeckt. In einer bestimmten Konfiguration ist ein Stabilitätsmechanismus in die Anzeige integriert, so dass die Mikrospiegel zwischen stabilen Zuständen wechseln und in diesen stabilen Zuständen verbleiben, bis eine Betätigungskraft auf die Mikrospiegel ausgeübt wird, die ausreicht, um eine Betätigungsschwelle zu überwinden. Die Mechanik des Scharniers, die Haftreibung aufgrund von Van-der-Waals-Kräften oder eine Kombination aus beidem kann genutzt werden, um Bistabilität zu erreichen. Die Bistabilität ermöglicht es, die Anzeige zwischen den Aktualisierungen stromlos zu machen, erfordert aber eine aktive Betätigung zwischen beiden Zuständen. Die Ansteuerungselektronik ähnelt derjenigen, die in Multiplex-LCDs verwendet wird.

Die EP 1 008 885 A1 offenbart eine optische Vorrichtung, wie z.B. eine Blende oder einen Spiegel mit variablem Reflexionsgrad, deren Betriebszustand durch ein elektrostatisches Blatt gesteuert wird. Die Vorrichtung umfasst einen ersten festen Träger mit einem Substrat und eine erste Elektrode, die von einer Isolierschicht bedeckt ist. Das elektrostatische Blatt ist mit einem Ende mit dem festen Träger verbunden und kann sich nach dem Anlegen einer Spannung zwischen der Elektrode und dem Blatt, das aus einer vollständig metallischen Folie oder einer isolierenden Folie mit einer Metallbeschichtung auf einer Seite besteht, über diesen Träger legen.

Des Weiteren können Shutterarrays in der Mikroskopie als ringförmige Blenden im Beleuchtungs- oder Abbildungssystem dienen, beispielsweise bei der Dunkelfeldmikroskopie, der Interferenzmikroskopie oder bei der STED-Mikroskopie.

Insbesondere für anspruchsvolle optische Anwendungen besteht ein Nachteil von Shutter- und Spiegelarrays aus dem Stand der Technik im Auftreten von störenden Artefakten in der Lichtmodulation. In diesem Zusammenhang sind zunächst Beugungseffekte zu nennen. Die Gesamtheit der kleinteiligen Mikroshutter oder Mikrospiegel bildet ein optisches Gitter, welches zwangsläufig zu Beugungseffekten beim Lichtdurchgang führt. Die beugenden Strukturen werden dabei insbesondere durch die Befestigungsabschnitte der einzelnen Mikroelemente gebildet, welche, beispielsweise als streifenförmige Strukturen, starr auf der Grundplatte des Arrays angeordnet sind, oder auch durch fertigungsbedingt zwischen den einzelnen Mikroelementen auf der Grundplatte verbleibende Materialstege, welche die Kontur der geschlossenen Mikroelemente umranden. Die Beugung an einem solchen optischen Gitter führt zu einer Lichtkonzentration um die Hauptbeugungsrichtungen (nullte Ordnung) und zur Lichtausbreitung in abgeschwächter Intensität in dazu abweichenden Richtungen (höhere Beugungsordnungen). Das kann zu unerwünschten Inhomogenitäten, vom Betrachter wahrgenommenen Unschärfen oder zu Farbrändern führen. Ein weiteres unerwünschtes optisches Artefakt besteht in sogenannten Geisterbildern, welche sich bei Spiegelarrays einstellen können. Geisterbilder entstehen bei geöffneter oder teilgeöffneter Stellung der Mikrospiegel. Das Bild, welches der Betrachter beim Blick durch das geöffnete oder teilgeöffnete Spiegelarray wahrnimmt, ist unter bestimmten Blickwinkeln eine Überlagerung des direkt transmittierten Lichtes (erwünscht, Blickrichtung) mit einem durch die Mikrospiegel eingespiegelten Geisterbild (unerwünscht). Selbst wenn das Geisterbild sehr schwach ausgeprägt ist, stört es doch die klare Durchsicht durch das Spiegelarray, beispielsweise bei Anwendung in einem Mikroskop oder einem Fenster.

Die KR 2012 0036242 A offenbart eine aktive Shutterbrille zum 3D-Sehen mit hoher Lichtdurchlässigkeit. Die aktive Shutterbrillen umfasst je eine

Linse für das linke und das rechte Auge, auf denen mikrooptische Shutter angeordnet sind, und ein Antriebsteil zur Steuerung der Shutter. Insbesondere sind Form, Größe und Position der Shutter willkürlich oder pseudo-willkürlich gewählt.

Die US 2014/218708 A1 offenbart ein Beleuchtungssystem einer mikrolithographischen Projektionsbelichtungsvorrichtung umfassend einen Lichtmodulator, der ein Modulatorsubstrat und eine Anordnung von Spiegeln umfasst, die von dem Modulatorsubstrat getragen werden, wobei sich benachbarte Spiegel wenigstens teilweise überlappen. Der Lichtmodulator umfasst ferner eine Vielzahl von Aktuatoren, die von dem Modulatorsubstrat getragen werden und so konfiguriert sind, dass sie die Spiegel einzeln kippen. Insbesondere weisen die Spiegel in der Substratebene pseudo-willkürliche Verdrehungen zueinander auf.

### OFFENBARUNG DER ERFINDUNG

Es ist daher die Aufgabe der vorliegenden Erfindung, ein gattungsgemäßes Spiegel-Shutter-Array vorzuschlagen, welches eine variable und räumlich hochaufgelöste Modulation in der Transmission und Reflexion von einfallendem Licht gestattet, wobei insbesondere die Transmission von möglichst wenig Beugungsartefakten und Geisterbildern beeinträchtigt sein soll.

Diese Aufgabe wird ausgehend von einem Spiegel-Shutter-Array gemäß dem Oberbegriff des Anspruchs 1 in Verbindung mit den kennzeichnenden Merkmalen gelöst. Vorteilhafte Weiterbildungen der Erfindung sind in den abhängigen Ansprüchen angegeben.

Die Erfindung schließt die technische Lehre ein, dass das Spiegel-Shutter-Array eine Mehrzahl von Mikroelementen umfasst, welche als Mikrospiegel und/oder als Mikroshutter ausgebildet sind, wobei jedes Mikroelement einen lichtundurchlässigen Flächenkörper aufweist, welcher mittels eines randseitigen Befestigungsabschnitts scharnierartig auf einer lichtdurchlässigen Grundplatte des Spiegel-Shutter-Arrays angeordnet ist, derart, dass jedes Mikroelement zwischen einer lichtundurchlässigen geschlossenen Stellung und wenigstens einer lichtdurchlässigen geöffneten Stellung schwenkbar ist, wobei die Mikroelemente jeweils einen Schichtaufbau aufweisen, welcher wenigstens eine druckverspannte Schicht und eine zugverspannte Schicht umfasst, wobei entlang eines Blattabschnitts jedes Mikroelements eine druckverspannte Kompensationsschicht auf der zugverspannten Schicht angeordnet ist, derart, dass jedes Mikroelement in die folgenden Abschnitte unterteilt ist:
- den Blattabschnitt, welcher global spannungsfrei ausgebildet ist und zwei im Wesentlichen planparallele Oberflächen aufweist,
- den randseitigen Befestigungsabschnitt, welcher starr auf der Grundplatte des Spiegel-Shutter-Arrays angeordnet ist, und
- einen dazwischenliegenden Scharnierabschnitt, welcher eine eigenspannungsinduzierte Krümmung aufweist, wodurch eine geöffnete Stellung des Mikroelements gebildet ist,
wobei die Gesamtheit der Mikroelemente in der jeweils geschlossenen Stellung ein irreguläres oder unstrukturiertes Gitter bildet, und wobei die Breite der Scharnierabschnitte unterschiedlicher Mikroelemente variiert, so dass ein Aufrollwinkel der Scharnierabschnitte in der wenigstens einen geöffneten Stellung der Mikroelemente variiert.

Ein Kerngedanke der Erfindung besteht darin, die Mikroelemente hinsichtlich ihrer individuellen Kontur, Größe und Orientierung zueinander derart auszubilden, dass ihre Gesamtheit möglichst strukturarm und regellos beschaffen ist, d.h. dass insbesondere möglichst wenige parallel und/oder äquidistant angeordnete beugende Strukturen vorliegen. Beim Lichtdurchgang durch ein erfindungsgemäßes Spiegel-Shutter-Array treten somit Gitterbeugungseffekte, d.h. solche Beugungseffekte, die aus der Interferenz von durch unterschiedliche Mikroelemente durchtretende Lichtwellen hervorgehen, nur in einem sehr geringen Maße auf und es resultiert eine im Vergleich zu Shutterarrays aus dem Stand der Technik signifikant homogenere Lichtmodulation, bzw. eine klarere Durchsicht für den Betrachter.

Nachfolgend werden die vorliegend verwendeten Begrifflichkeiten betreffend unterschiedliche Gittertypen genauer erläutert.

Die Gesamtheit der Mikroelemente bildet eine im Wesentlichen lückenlose und überlappungsfreie Partition der lichtaktiven Fläche des Spiegel-Shutter-Arrays. Dies entspricht formal einem Gitter, dessen Gitterzellen durch die Mikroelemente gebildet sind, wobei die Ecken und Seiten der beispielsweise polygonalen Konturen der Mikroelemente die Gitterpunkte bzw. die Gitterlinien darstellen. Das erfindungswesentliche Merkmal, welches das Problem der Beugungsartefakte adressiert, findet Ausdruck in der Topologie des durch die Mikroelemente gebildeten Gitters.

Die diversen Gittertypen können insbesondere in strukturierte und unstrukturierte Gitter klassifiziert werden.

Strukturierte Gitter weisen eine regelmäßige Topologie auf, d.h., dass die Gitterzellen, unabhängig von ihrer Zellgeometrie, in einem regelmäßigen Raster vorliegen. Insbesondere lassen sich die Gitterzellen strukturierter Gitter eindeutig durch Tupel ganzer Zahlen indizieren, im Fall eines zweidimensionalen Flächengitters durch Indexpaare. Sofern alle Gitterzellen eines strukturierten Gitters die gleiche Geometrie aufweisen, man spricht in diesem Fall von einem regulären Gitter, sind zur Konstruktion des gesamten Gitters lediglich Angaben betreffend den Gitterursprung, die Orientierung der Gitterachsen, die Seitenlängen der Gitterzellen sowie die Anzahl an Gitterzellen je Gitterachse erforderlich. Die Gitterachsen können insbesondere ein kartesisches Koordinatensystem aufspannen, gleichwohl sind bspw. auch Polarkoordinatendarstellungen geeignet, etwa um eine Kreisfläche durch ein strukturiertes Gitter aus Ringsegmenten zu partitionieren, wobei die Indexpaare in diesem Fall eine Radial- und eine Polarwinkelkomponente bezeichnen. Reguläre Gitter, d.h. strukturierte Gitter mit gleichartigen Gitterzellen, weisen ein hohes Maß an Regelmäßigkeit und/oder Periodizität auf, d.h. sie sind insbesondere durch eine Vielzahl paralleler und/oder äquidistanter Gitterlinien charakterisiert. Im vorliegenden Anwendungsfall eines Gitters aus Mikroelementen führt diese Gitterstruktur zu nachteiligen Beugungseffekten von durch die Blendenvorrichtung durchtretendem Licht. Die beugenden Strukturen sind bei geöffneten Mikroelementen durch die Kanten ihrer Flächenkörper und der randseitigen Befestigungsabschnitte der einzelnen Mikroelemente gebildet, sowie durch die Kanten von geschlossenen Mikroelementen in Nachbarschaft zu einem geöffneten Mikroelement. Zudem können, wie vorstehend bereits erwähnt, aufgrund des Herstellungsprozesses stegförmige Umrandungen der Mikroelemente auf der Grundplatte des Spiegel-Shutter-Arrays angeordnet sein, deren Kanten ebenfalls zur Lichtbeugung beitragen.

Erfindungsgemäß wird vorgeschlagen, die Mikroelemente hinsichtlich ihrer Geometrie, Größe und relativen Anordnung derart auszubilden, dass ihre Gesamtheit ein irreguläres oder unstrukturiertes Gitter bildet.

Unter einem irregulären Gitter wird ein strukturiertes Gitter verstanden, welches aus Gitterzellen unterschiedlicher Formen konstituiert wird. Beispielsweise können die einzelnen Gitterzellen polygonale Konturen aufweisen, welche sich in der Anzahl an Gitterpunkten und Gitterlinien sowie der durch die Gitterlinien eingeschlossenen Winkel zumindest teilweise voneinander unterscheiden. Ein solches irreguläres Gitter lässt sich zwar auf ein reguläres Gitter abbilden, jedoch weist es in signifikant geringerem Ausmaß parallele und/oder periodische Strukturen auf, so dass wesentlich diffusere oder fast keine Lichtbeugungsmuster entstehen.

Unstrukturierte Gitter stellen den allgemeinsten Gittertyp dar und weisen weder eine regelmäßige Topologie noch eine gleichmäßige Gitterzellgeometrie auf. Eine Vorschrift zu ihrer Konstruktion muss für jeden Gitterpunkt die Konnektivität mit umliegenden Gitterpunkten umfassen. Unstrukturierte Gitter weisen einen besonders geringen Grad an Ordnung und regelmäßigen Strukturen auf und sind daher im Sinne der vorliegenden Erfindung besonders geeignet, um ein strukturarmes Beugungsmuster bei Lichtdurchgang zu erzeugen.

Vorzugsweise bildet die Gesamtheit der Mikroelemente in der jeweils geschlossenen Stellung ein asymmetrisches Gitter. Ein asymmetrisches Gitter liegt vor, wenn es keine Kongruenzabbildung gibt, welche das Gitter auf sich selbst abbildet, d.h., dass das Gitter insbesondere mittels beliebiger Drehungen und/oder Spiegelungen nicht auf sich selbst abgebildet werden kann. Dieses Merkmal der Asymmetrie trägt zu einer weiteren Reduktion von unerwünschten Beugungseffekten beim Lichtdurchgang durch das Spiegel-Shutter-Array bei. Insbesondere kann das durch die Gesamtheit der Mikroelemente gebildete Gitter eine derartige Asymmetrie aufweisen, dass bereits Unterabschnitte des Gitters für sich betrachtet asymmetrisch ausgebildet sind.

In vorteilhafter Ausführungsform weisen die Mikroelemente in der geschlossenen Stellung jeweils eine unregelmäßige polygonale Kontur auf. Die Kontur bezeichnet dabei jeweils den Umriss des das Mikroelement bildenden Flächenkörpers in seiner Haupterstreckungsebene. In der geschlossenen Stellung nehmen die Mikroelemente dabei vorzugsweise eine planare Gestalt an. Im Gegensatz zu einem regelmäßigen Polygon ist ein unregelmäßiges Polygon dadurch gekennzeichnet, dass nicht sämtliche Seiten die gleiche Länge aufweisen, und unterschiedliche Winkel zwischen den Seiten eingeschlossen sind. Dadurch wird gewährleistet, dass eine möglichst geringe Anzahl von gleichartigen Strukturen in dem Spiegel-Shutter-Array wiederkehren, insbesondere möglichst wenige parallele oder äquidistant angeordnete Linienstrukturen. Insbesondere kann auch diejenige Randseite des Mikroelementes, welche den Befestigungsabschnitt bildet, von Mikroelement zu Mikroelement unterschiedlich orientiert sein.

Vorzugsweise beträgt die Anzahl der Seiten der polygonalen Konturen der Mikroelemente zwischen drei und acht. Dies bietet ausreichende geometrische Variationsmöglichkeiten, um die erfindungsgemäße Strukturarmut der Gesamtheit der Mikroelemente zu realisieren. Bei noch komplexer konturierten Mikroelementen oder ungünstigen WinkelKombinationen besteht zudem die Gefahr eines gegenseitigen Verhakens beim Schwenken der Mikroelemente zwischen den verschiedenen Stellungen.

In weiterer vorteilhafter Ausführungsform weisen die Mikroelemente in der geschlossenen Stellung jeweils eine Kontur aus wenigstens abschnittsweise gekrümmten Linien auf. Derartige gekrümmte Konturverläufe stellen eine weitere Gestaltungsmöglichkeit zur Variation der Mikroelemente dar und tragen somit zur erfindungsgemäßen Realisierung einer möglichst beugungsarmen Lichttransmission bei.

Insbesondere weist das Spiegel-Shutter-Array Aktuierungsmittel zum Schwenken der Mikroelemente zwischen der wenigstens einen geöffneten Stellung und der geschlossenen Stellung auf, wobei mittels der Aktuierungsmittel einzelne Mikroelemente und/oder Gruppen von Mikroelementen aktuierbar sind. Aus dem Stand der Technik sind beispielsweise elektrostatisch, magnetisch oder thermisch wirkende Aktuierungsmittel bekannt. Vorzugsweise beruht die Aktuierung auf einem Konzept, bei welchem Gruppen von Mikroelementen simultan schwenkbar sind. Größe und Kontur derartiger Gruppen sind dabei sowohl an die Anforderungen der adressierten Anwendung anzupassen, als auch an die fertigungstechnischen Randbedingungen hinsichtlich der passiven Adressierung.

In einer speziellen Ausführungsform des erfindungsgemäßen Spiegel-Shutter-Arrays bildet die Gesamtheit der Mikroelemente eine kreisförmige oder elliptische oder polygonale Gestalt oder eine Freiform aus, wobei mittels der Aktuierungsmittel ringabschnittsförmige Gruppen von Mikroelementen aktuierbar sind. Diese Ausführungsform dient der Bildung von Ringblenden mit variablen Durchmessern und Öffnungswinkeln, beispielsweise zur Anwendung in optischen Instrumenten.

In vorteilhafter Ausführungsform konstituieren die Aktuierungsmittel ein elektrostatisches Wirkprinzip, wozu die Grundplatte des Spiegel-Shutter-Arrays ein elektrisch leitfähiges Material aufweist, und die Mikroelemente Elektroden aufweisen oder bilden, wobei die Aktuierungsmittel eine steuerbare Spannungsquelle zum Anlegen von elektrischen Spannungssignalen zwischen der Grundplatte und den Elektroden umfassen. Die Grundplatte und die Elektroden stellen Bestandteile der Aktuierungsmittel dar und durch Erzeugen einer Potentialdifferenz mittels der Spannungsquelle ist eine elektrostatische Kraft zwischen Mikroelementen und Grundplatte erzeugbar.

Vorzugsweise weist die Grundplatte eine Mehrzahl von untereinander elektrisch isolierten Grundplattensegmenten auf, und die Elektroden sind elektrisch zusammengeschlossen zu einer Mehrzahl von untereinander elektrisch isolierten Feldern, wobei die Grundplattensegmente und die Felder jeweils einzeln mit der Spannungsquelle elektrisch verbunden sind. Durch Anlegen einer elektrischen Spannung zwischen einzelnen Grundplattensegmenten und Feldern sind somit die Mikroelemente in Subfeldern, welche dem geometrischen Überlapp der aktiven Grundplattensegmente und Felder entsprechen, gezielt aktuierbar.

Erfindungsgemäß weisen die Mikroelemente des Spiegel-Shutter-Arrays jeweils einen Schichtaufbau auf, welcher wenigstens eine druckverspannte Schicht und eine zugverspannte Schicht umfasst, wobei entlang eines Blattabschnitts jedes Mikroelementes eine druckverspannte Kompensationsschicht auf der zugverspannten Schicht angeordnet ist, derart, dass jedes Mikroelement in die folgenden Abschnitte unterteilt ist:
- den Blattabschnitt, welcher global spannungsfrei ausgebildet ist und zwei im Wesentlichen planparallele Oberflächen aufweist,
- den randseitigen Befestigungsabschnitt, welcher starr auf der Grundplatte des Spiegel-Shutter-Arrays angeordnet ist, und
- einen dazwischenliegenden Scharnierabschnitt, welcher eine eigenspannungsinduzierte Krümmung aufweist, wodurch eine geöffnete Stellung des Mikroelementes gebildet ist.

Ohne anliegende elektrische Spannung befinden sich die Mikroelemente in einer maximal geöffneten Stellung, welche aufgrund der vorliegenden Eigenspannungen durch eine Krümmung des Scharnierabschnitts zwischen dem auf der Grundplatte formschlüssig fixierten Befestigungsabschnitt und dem spannungskompensierten Blattabschnitt zustande kommt. Beispielsweise weist der Scharnierabschnitt dabei einen Krümmungsradius auf, welcher ein Hundertstel bis ein Drittel der Länge der längsten Seite der Kontur des jeweiligen Mikroelementes beträgt.

Vorzugsweise ist der Blattabschnitt in der maximal geöffneten Stellung des jeweiligen Mikroelementes im Wesentlichen orthogonal zur Grundplatte ausgerichtet. In einer solchen Senkrechtstellung ist eine maximale Lichttransmission gegeben, und diese Stellung wird eingenommen, wenn die Mikroelemente keiner elektrostatischen Kraft durch eine angelegte elektrische Spannung unterliegen, so dass die Scharnierabschnitte rein nach Maßgabe ihrer mechanischen Eigenspannungen aufgerollt sind. Zwischen dieser orthogonalen Extremalstellung und der geschlossenen Stellung der Mikroelemente können vorzugsweise weitere Zwischenstellungen eingenommen werden, welche bzgl. des Transmissionsgrads entsprechende Grauwerte repräsentieren. Ausgehend von der maximal geöffneten Stellung der Mikroelemente kann durch Anlegen einer kontinuierlich steigenden elektrischen Spannung zwischen Grundplatte und Elektroden ein stufenloses Schließen der Mikroelemente erfolgen bis zu einer Grenzspannung, ab welcher die Mikroelemente vollständig schließen. In einer Ausführungsform des erfindungsgemäßen Spiegel-Shutter-Arrays mit Mikroelementen in Gestalt von Mikrospiegeln wird diese Vielfalt von einstellbaren Orientierungswinkeln der Mikroelemente durch Steuerung der Aktuierungsmittel benutzt, um Licht gezielt zu lenken.

Erfindungsgemäß variiert die Breite der Scharnierabschnitte unterschiedlicher Mikroelemente, so dass ein Aufrollwinkel der Scharnierabschnitte in der wenigstens einen geöffneten Stellung der Mikroelemente variiert. Mit der Breite des jeweiligen Scharnierabschnitts ist dabei dessen Erstreckung zwischen dem Befestigungsabschnitt und dem Blattabschnitt bezeichnet. Entlang jedes Scharnierabschnitts ist die Krümmung näherungsweise konstant und der jeweilige Aufrollwinkel beschreibt dementsprechend den Mittelpunktswinkel des von dem Scharnierabschnitt gebildeten Kreisbogens. Aus der Variation der Breite der Scharnierabschnitte resultiert somit in jeder geöffneten Stellung der Mikroelemente eine Variation der Stellung der Blattabschnitte um einen Mittelwert Eine derartige Stellungsvariation ist insbesondere bei als Mikrospiegeln ausgebildeten Mikroelementen von Vorteil, weil daraus eine signifikante Unterdrückung der eingangs genannten Geisterbilder resultiert und somit die Qualität der optischen Abbildung mit dem erfindungsgemäßem Spiegel-Shutter-Array weiter verbessert wird.

In vorteilhafter Ausführungsform weist der Schichtaufbau jedes Mikroelementes wenigstens eine elektrisch leitfähige Schicht auf, wodurch jeweils die Elektrode gebildet ist. Aus dem Stand der Technik ist es bekannt, beispielsweise Aluminiumlegierungen zum Aufbau eines mit dedizierten Eigenspannungen versehenen Schichtstapels zu verwenden.

Weiterhin weist auch die Grundplatte des Spiegel-Shutter-Arrays vorzugsweise einen Schichtaufbau auf, welcher eine lichtdurchlässige elektrisch leitfähige Bodenschicht und eine lichtdurchlässige elektrisch isolierende Isolationsschicht umfasst, wobei der Befestigungsabschnitt jedes Mikroelementes auf der Isolationsschicht angeordnet ist. Die Isolationsschicht dient also der elektrischen Trennung von Bodenschicht und den an den Mikroelementen angeordneten bzw. durch diese gebildeten Elektroden.

Insbesondere weisen die Seiten der Konturen der Mikroelemente einer Länge von 1 Mikrometer bis zu 2 Millimeter auf. Unter Berücksichtigung fertigungstechnischer Randbedingungen sind mit derartig dimensionierten Mikroelementen alle relevanten Anwendungen adressierbar.

Eine weitere beispielhafte Anwendung des erfindungsgemäßen Spiegel-Shutter-Arrays betrifft ultraschnelle Laserschutzbrillen zum Schutz vor Laser-Attacken, beispielsweise auf Piloten im Cockpit bei Start oder Landung eines Flugzeugs sowie auf Sicherheitspersonal (Polizei und Militär). Die für diesen Zweck heute eingesetzten Brillen basieren auf optischen Filtern, welche nur vor gewissen Wellenlängen schützen und die Farbwahrnehmung verfälschen, was nicht nur in der Nacht kritisch ist.

### BEVORZUGTES AUSFÜHRUNGSBEISPIEL DER ERFINDUNG

Weitere, die Erfindung verbessernde Maßnahmen werden nachstehend gemeinsam mit der Beschreibung von bevorzugten Ausführungsbeispielen der Erfindung anhand der Figuren näher dargestellt. Es zeigen:
- Fig. 1: eine Draufsicht auf Felder und Mikroelemente eines ersten Ausführungsbeispiels,
- Fig. 2: eine perspektivische Ansicht eines Ausschnitts des ersten Ausführungsbeispiels mit teilweise geöffneten Mikroelementen,
- Fig. 3: eine Explosionsdarstellung der Felder und der Grundplatte des ersten Ausführungsbeispiels,
- Fig. 4: eine Darstellung des ersten Ausführungsbeispiels des erfindungsgemäßen Spiegel-Shutter-Arrays,
- Fig. 5: beispielhafte Schaltzustände des ersten Ausführungsbeispiels,
- Fig. 6: eine Draufsicht auf Mikroelemente eines zweiten Ausführungsbeispiels,
- Fig. 7: eine Draufsicht auf Mikroelemente eines dritten Ausführungsbeispiels,
- Fig 8: eine perspektivische Ansicht eines vierten Ausführungsbeispiels mit teilweise geöffneten Mikroelementen,
- Fig. 9: eine Draufsicht auf Mikroelemente eines fünften Ausführungsbeispiels, und
- Fig. 10 und 11: schematische Querschnittsteilansichten eines Mikroelements eines erfindungsgemäßen Spiegel-Shutter-Arrays.

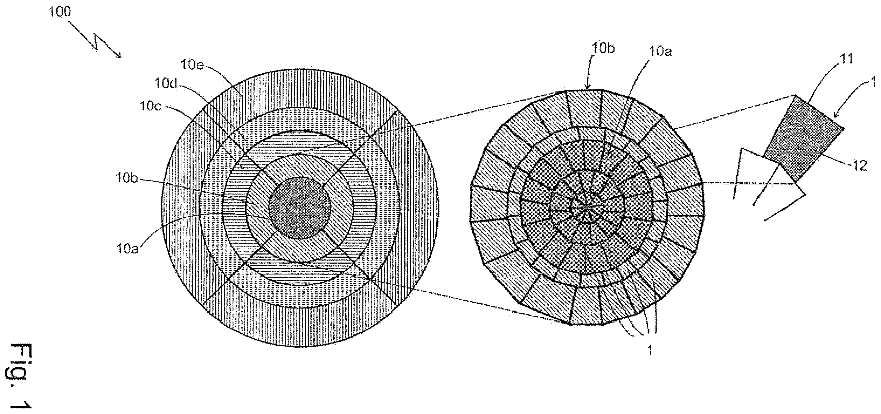

Fig. 1 zeigt eine Draufsicht auf Felder 10a - 10e und Mikroelemente 1 eines ersten erfindungsgemäßen Spiegel-Shutter-Arrays 100. Die Mikroelemente 1 sind elektrisch zusammengeschlossen unter Bildung der untereinander elektrisch isolierten Felder 10a - 10e. Die Gesamtheit der Mikroelemente 1 bildet eine kreisförmige Gestalt aus, welche in die vier ringförmigen Felder 10b - 10e sowie das kreisförmige innere Feld 10a segmentiert ist. Jedes der fünf Felder 10a - 10e kann unabhängig von den anderen Feldern mit einem elektrischen Potential beaufschlagt werden. Die vergrößerten Teilansichten zeigen die beiden inneren Felder 10a und 10b, sowie deren Aufbau aus den einzelnen Mikroelementen 1. Die Mikroelemente 1 umfassen den Blattabschnitt 12 sowie den randseitigen Befestigungsabschnitt 11, welcher hier nur als eine Linie angedeutet ist und über welchen die Mikroelemente 1 auf der Grundplatte des Spiegel-Shutter-Arrays 100 angeordnet sind. Die unregelmäßigen polygonalen Konturen der Mikroelemente 1 weisen hier drei, vier oder fünf Seiten auf und variieren untereinander hinsichtlich ihrer geometrischen Aspektverhältnisse und ihrer Flächeninhalte. Die Gesamtheit der Mikroelemente 1 bildet in der hier dargestellten geschlossenen Stellung ein asymmetrisches unstrukturiertes Gitter.

Die Mikroelemente 1 können dabei je nach adressierter Anwendung als Mikrospiegel oder als Mikroshutter ausgebildet sein, d.h. entweder zur gezielten Lichtlenkung dienen oder zur Variation des Transmissionsgrades eingesetzt werden. Dies gilt nicht nur für das hier dargestellte Ausführungsbeispiel, sondern kann prinzipiell auf jedes erfindungsgemäße Spiegel-Shutter-Array zutreffen. Basierend auf einem zur Fertigung eingesetzten Dünnschichtprozess sind die Mikroelemente 1 üblicherweise aus einem Metall ausgebildet, so dass eine Spiegelwirkung auch bei als Mikroshuttern fungierenden Mikroelementen 1 gegeben ist. Die Spiegelwirkung kann bei Bedarf beispielsweise durch fertigungsseitige Einstellung einer ausgeprägten Oberflächenrauheit der Mikroelemente 1 unterdrückt werden. Ist die Spiegelwirkung andernfalls erwünscht, so kann fertigungsseitig auf besonders glatte Oberflächen abgestellt werden, wobei diese als eine Verschleißschutzmaßnahme ggfs. noch mit einer harten und transparenten Schutzschicht, bspw. aus TiO₂, versiegelt werden können. Ferner können zur Erhöhung der Reflektivität oder spektraler Eigenschaften dielektrische Multischichtstruktur Spiegel aufgebracht werden. Prinzipiell kann es für spezielle Anwendungen zudem vorteilhaft sein, ein erfindungsgemäßes Spiegel-Shutter-Array 100 bereitzustellen, dessen Mikroelemente 1 teilweise als Mikrospiegel und teilweise als Mikroshutter ausgebildet sind.

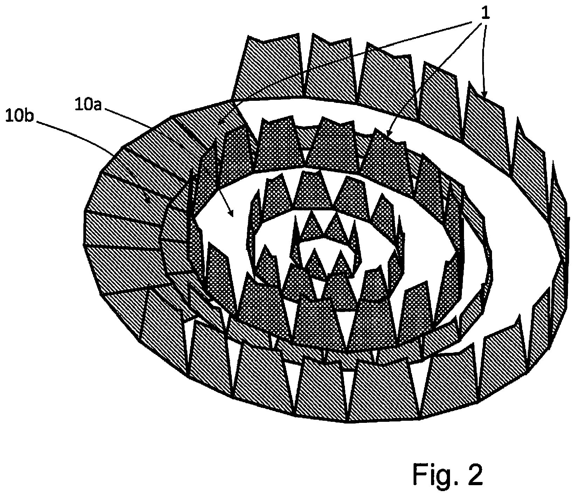

In Fig. 2 ist ein beispielhafter Schaltzustand des Ausführungsbeispiels der Fig. 1 dargestellt. Darin befinden sich in den Feldern 10a und in einem Abschnitt von 10b jeweils sämtliche Mikroelemente 1 in einer lichtdurchlässigen geöffneten Stellung, während die Mikroelemente 1 der übrigen Felder von 10b sämtlich geschlossen sind. Der geschlossene Zustand der Mikroelemente 1 wird durch eine anliegende und betragsmäßig ausreichend große elektrische Spannung zwischen den Mikroelementen 1 und den, hier nicht dargestellten, darunter angeordneten Grundplattensegmenten erzeugt. Die geöffneten Mikroelemente 1 unterliegen keiner elektrostatischen Anziehung. Die Blattabschnitte der geöffneten Mikroelemente 1 sind hier um etwa 90° gegenüber der geschlossenen Stellung geschwenkt, so dass der lokale Transmissionsgrad maximiert ist.

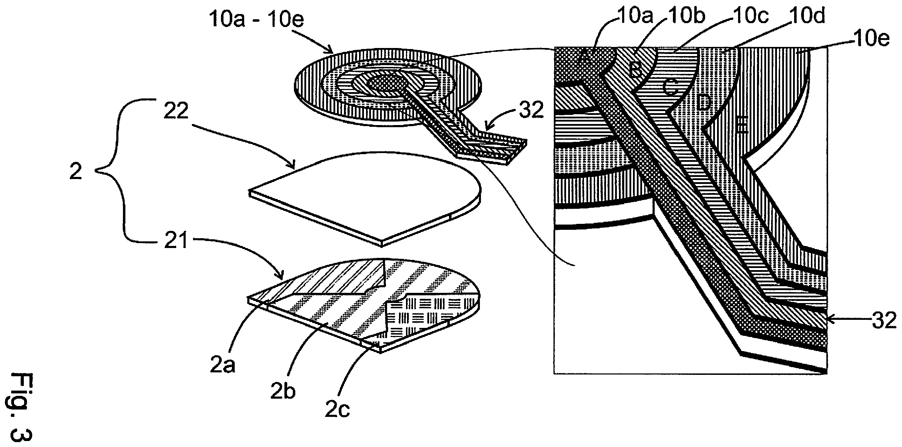

Fig. 3 zeigt eine schematische Explosionsdarstellung der Felder 10a - 10e nebst ihrer elektrischen Zuleitungen 32 und der Grundplatte 2 des ersten Ausführungsbeispiels. Die Grundplatte 2 umfasst die nicht-leitende Isolationsschicht 22 und die in die Grundplattensegmente 2a - 2c elektrisch unterteilte Bodenschicht 21. Sowohl die Bodenschicht 21 als auch die Isolationsschicht 22 sind aus einem optisch transparenten Werkstoff gefertigt. Durch Anlegen einer elektrischen Spannung zwischen den Grundplattensegmenten 2a - 2c und den Feldern 10a - 10e entsteht eine auf das Schließen der Mikroelemente gerichtete elektrostatische Kraft. Die vergrößerte Teilansicht der Zuleitungsarchitektur der Felder 10a - 10e zeigt die untereinander sowie gegenüber den nicht adressierten Feldern elektrisch isolierten Zuleitungen 32.

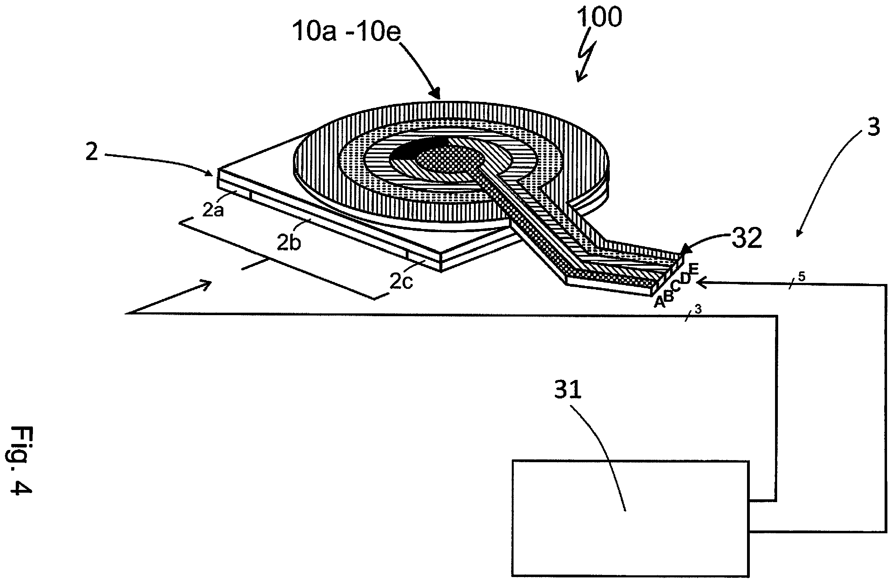

Fig. 4 zeigt eine schematische Darstellung des ersten Ausführungsbeispiels des erfindungsgemäßen Spiegel-Shutter-Arrays 100, welches den vorbeschriebenen Aufbau mit den Feldern 10a - 10e und mit einem Schichtaufbau und einer Segmentierung der Grundplatte 2 aufweist. Die Aktuierungsmittel 3 umfassen ferner die steuerbare Spannungsquelle 31, welche hier beispielhaft über acht Kanäle zur individuellen Kontaktierung der drei Grundplattensegmente 2a - 2c der Bodenschicht 21 und der fünf Felder 10a - 10e verfügt, sowie beispielsweise einen Mikrokontroller, Treiber und Schalter umfasst. Dargestellt ist ein beispielhafter Schaltzustand, bei welchem der schwarz dargestellte ringabschnittsförmige Bereich des Feldes 10b geschlossen ist, d.h., dass eine entsprechende elektrische Spannung zwischen dem Feld 10b und dem Grundplattensegment 2a anliegt. Mit dieser Konfiguration entsteht der in Fig. 2 dargestellte Schaltzustand als Ausschnitt des Spiegel-Shutter-Arrays 100.

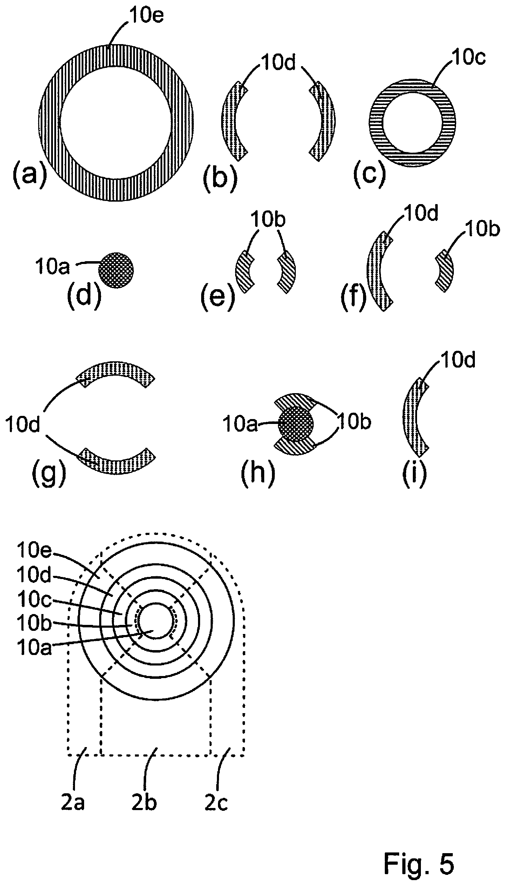

Fig. 5 zeigt beispielhafte Schaltzustände des ersten Ausführungsbeispiels, wobei die dargestellten geometrischen Figuren jeweils den geschlossenen, d.h. lichtundurchlässigen, Abschnitten der jeweiligen Felder aus Mikroelementen entsprechen. Im untersten Teilbild ist zudem eine vertikale Draufsicht auf die Felder 10a - 10e und die darunter angeordneten Grundplattensegmente 2a - 2c (strichliert umrandet) gegeben, woraus die für die Aktuierung der Mikroelemente relevante Überlappung zwischen Feldern 10a - 10e und Grundplattensegmenten 2a - 2c ersichtlich ist. Die elektrostatische Aktuierung ist auf ein Schließen der Mikroelemente gerichtet, dementsprechend wird die geöffnete Stellung der Mikroelemente in ihrem elektrisch spannungsfreien Zustand eingenommen. Beispielsweise wird der in Teilbild (a) dargestellte Schaltzustand, in welchem sämtliche Mikroelemente des Feldes 10e geschlossen und sämtliche übrigen Felder (nicht dargestellt) geöffnet sind, dadurch realisiert, dass zwischen dem Feld 10e und allen drei Grundplattensegmenten 2a - 2c eine zum vollständigen Schließen der Mikroelemente ausreichende Spannung anliegt, während die übrigen Felder auf demselben elektrischen Potential liegen wie die Grundplattensegmente. Im Schaltzustand des Teilbild (b), in welchem lediglich die Mikroelemente in zwei gegenüberliegenden Abschnitten des Feldes 10d geschlossen sind, liegt eine elektrische Spannung zwischen dem Feld 10d und den Grundplattensegmenten 2a und 2c an, wohingegen das Grundplattensegment 2b auf demselben elektrischen Potential wie das Feld 10d liegt, so dass die Mikroelemente im Überlappungsbereich des Feldes 10d mit dem Grundplattensegments 2b in ihrer geöffneten Stellung vorliegen. Den Schaltzustand des Teilbildes (h) erhält man, indem eine elektrische Spannung zwischen den Feldern 10a und 10b sowie dem Grundplattensegmenten 2b anliegt. Andere beispielhafte Schaltzustände sind in den übrigen Teilbildern dargestellt, wobei eine Vielzahl weiterer Schaltzustände mit der vorliegenden Ausführungsform des erfindungsgemäßen Spiegel-Shutter-Arrays realisierbar ist.

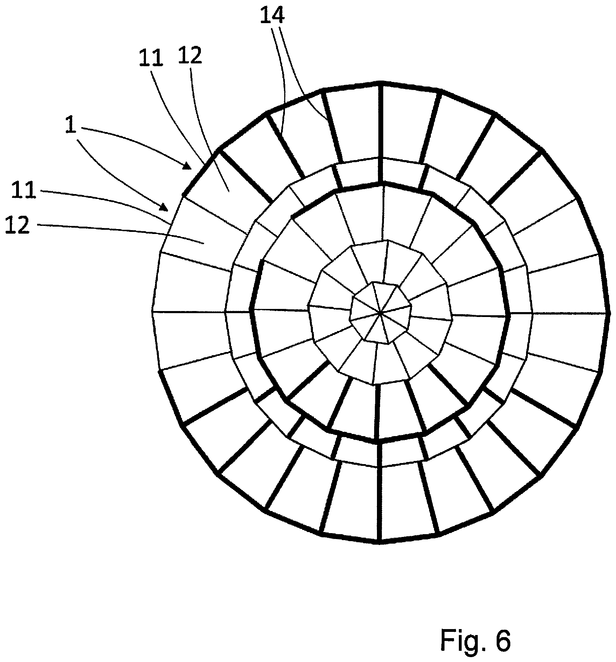

Fig. 6 zeigt eine Draufsicht auf die Mikroelemente 1 eines zweiten Ausführungsbeispiels eines erfindungsgemäßen Spiegel-Shutter-Arrays, wobei sich hier alle Mikroelemente 1 in der geschlossenen Stellung befinden. Geometrie und Anordnung der Mikroelemente 1 ähneln dem ersten Ausführungsbeispiel, Im Unterschied dazu sind jedoch zwischen einem Teil der Mikroelemente 1 die Stege 14 auf die unter den Mikroelementen 1 befindliche Grundplatte aufgebracht. In der Darstellung der Fig. 6 sind die Stege 14 als Konturlinien der betreffenden Mikroelemente 1 mit größerer Linienbreite eingezeichnet. Die Stege 14 können beispielsweise in Form eines verbreiterten Befestigungsabschnitts 11 und/oder als Umrandung der Blattabschnitte 12 (in geschlossener Stellung) vorliegen. Die Stege 14 sind beispielsweise opak ausgebildet. In den geöffneten Stellungen der Mikroelemente 1 wird durch das Vorhandensein derartiger Stege 14 zwar der globale Transmissionsgrad des Spiegel-Shutter-Arrays reduziert, allerdings stellen die Stege 14 einen weiteren Freiheitsgrad zur erfindungsgemäßen Reduktion des Ordnungsgrades des durch die Gesamtheit der Mikroelemente 1 gebildeten Gitters dar und können zu einer weiteren Homogenisierung des transmittierten Lichteindrucks beitragen. Dabei kann neben der Anzahl und Orientierung der Stege 14 mit weiterem Vorteil auch noch ihre Breite variiert werden.

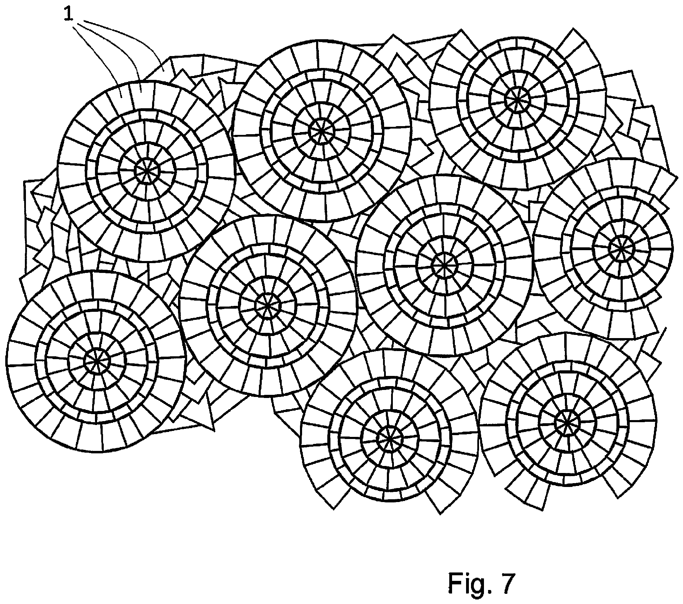

Fig. 7 zeigt eine Draufsicht auf einen Teil der Mikroelemente 1 eines dritten Ausführungsbeispiels eines erfindungsgemäßen Spiegel-Shutter-Arrays, wobei sich hier alle Mikroelemente 1 in einer geöffneten Stellung befinden, in welcher die Blattabschnitte der Mikroelemente 1 senkrecht aus der Zeichnungsebene herausstehen. Die dem ersten Ausführungsbeispiel ähnelnden ringartigen Felder treten in dem Bildausschnitt neunmal auf und sind jeweils voneinander verschieden ausgebildet und in unregelmäßigen Abständen zueinander angeordnet, wobei die Zwischenräume ebenfalls mit polygonal konturierten Mikroelementen 1 ausgefüllt sind. Die Gesamtheit der Mikroelemente 1 bildet ein unstrukturiertes Gitter.

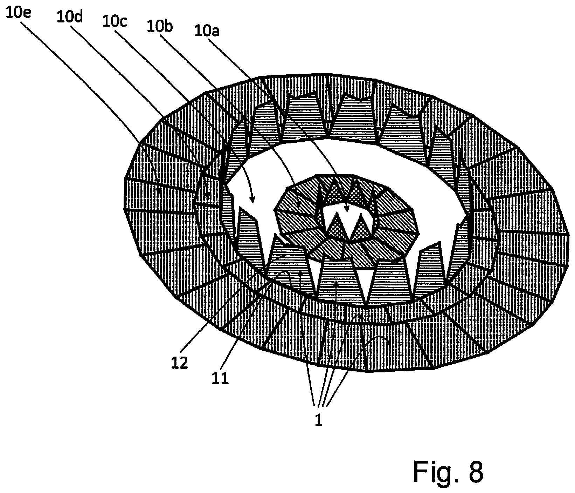

In Fig. 8 ist ein beispielhafter Schaltzustand eines vierten Ausführungsbeispiels eines erfindungsgemäßen Spiegel-Shutter-Arrays dargestellt. Darin befinden sich in den Feldern 10a und 10c jeweils sämtliche Mikroelemente 1 in einer lichtdurchlässigen geöffneten Stellung, während die Mikroelemente 1 der übrigen Felder 10b, 10d und 10e sämtlich geschlossen sind. Der geschlossene Zustand der Mikroelemente 1 wird durch eine anliegende und betragsmäßig ausreichend große elektrische Spannung zwischen den Mikroelementen 1 und den hier nicht dargestellten, darunter angeordneten Grundplattensegmenten erzeugt. Die geöffneten Mikroelemente 1 unterliegen keiner elektrostatischen Anziehung. Die Blattabschnitte 12 der geöffneten Mikroelemente 1 sind hier um etwa 90° gegenüber der geschlossenen Stellung geschwenkt, so dass der lokale Transmissionsgrad maximiert ist.

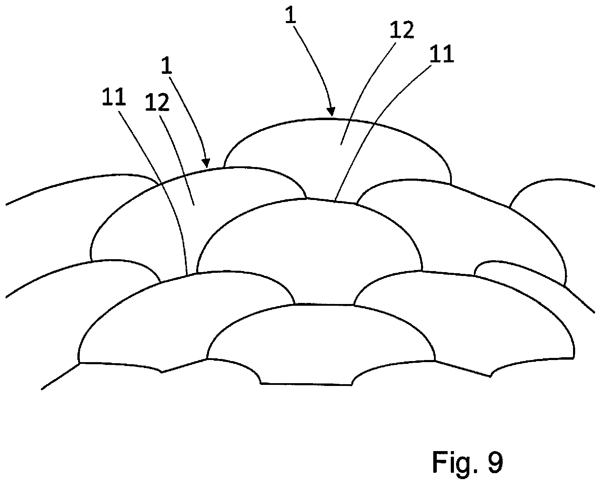

Fig. 9 zeigt eine Draufsicht auf einen Teil der Mikroelemente 1 in geschlossener Stellung eines fünften Ausführungsbeispiels eines erfindungsgemäßen Spiegel-Shutter-Arrays. Die Mikroelemente 1 weisen jeweils eine Kontur aus abschnittsweise gekrümmten Linien auf. Lediglich die Befestigungsabschnitte 11 sind jeweils geradlinig ausgebildet, während die Blattabschnitte 12 im Übrigen einen gekrümmten Konturverlauf aufweisen. Die Verwendung von gekrümmten Konturen und/oder deren Kombination mit geradlinigen Abschnitten stellen eine weitere vorteilhafte Möglichkeit dar, um die Regelmäßigkeit des durch die Gesamtheit der Mikroelemente 1 gebildeten Gitters zu reduzieren. Die Befestigungsabschnitte 11 sind hier bewusst unterschiedlich orientiert und die Mikroelemente 1 sind voneinander verschieden und asymmetrisch ausgebildet.

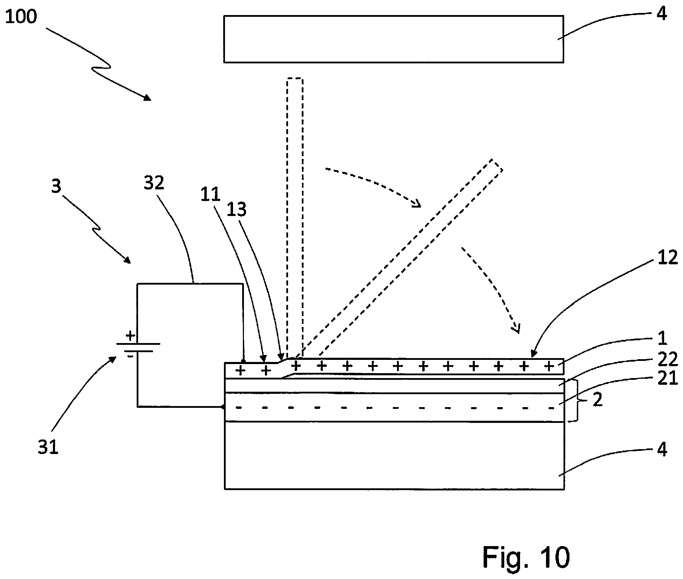

Fig. 10 zeigt eine quergeschnittene Teilansicht des erfindungsgemäßen Spiegel-Shutter-Arrays. Die Darstellung beinhaltet die Grundplatte 2 und ein einzelnes Mikroelement 1, welche zwischen zwei transparenten Abdeckscheiben 4 aufgenommen sind. Das Mikroelement 1 bildet eine Elektrode und ist zu diesem Zwecke aus einem elektrisch leitfähigen Werkstoff hergestellt. Die Grundplatte 2 umfasst in einem Schichtaufbau die lichtdurchlässige und elektrisch leitfähige Bodenschicht 21 sowie die darauf angeordnete lichtdurchlässige und elektrisch isolierende Isolationsschicht 22. Das Mikroelement 1 ist mit seinem Befestigungsabschnitt 11 auf der Isolationsschicht 22 angeordnet und über eine Krümmung seines Scharnierabschnitts 13 vollzieht sich die Schwenkbewegung des Blattabschnitts 12, welcher durch zwei im Wesentlichen planparallele Oberflächen gekennzeichnet ist. In dem in der Fig. 10 dargestellten Zustand ist zwischen dem Mikroelement 1 und der Bodenschicht 21 durch die Spannungsquelle 31 über die Zuleitungen 32 eine elektrische Spannung angelegt, so dass eine elektrostatische Anziehung zwischen Bodenschicht 21 und Mikroelement 1 zu einem Schließen von Letzterem in die dargestellte horizontale, d.h. geschlossene, Stellung des Blattabschnitts 12 führt. Strichliert dargestellt sind zwei geöffnete Stellungen des Mikroelements 1, nämlich zum einen die im Wesentlichen orthogonal zur Grundplatte 2 orientierte maximal geöffnete Stellung, welche einer maximalen Transmission entspricht, sowie eine halbgeöffnete Zwischenstellung, in welcher ein Winkel von etwa 45° zwischen dem Blattabschnitt 12 und der Grundplatte 2 vorliegt. Die maximal geöffnete Stellung wird eingenommen, wenn Mikroelement 1 und Bodenschicht 21 auf demselben elektrischen Potential liegen, und in der teilgeöffneten Zwischenstellung liegt eine im Vergleich zur geschlossenen Stellung geringere elektrische Spannung an. Durch geeignete Variation der angelegten elektrischen Spannung kann folglich eine Vielzahl an teilgeöffneten Zwischenstellung mit unterschiedlichen Winkeln des Blattabschnitts 12 gegenüber der Grundplatte 2 eingestellt werden.

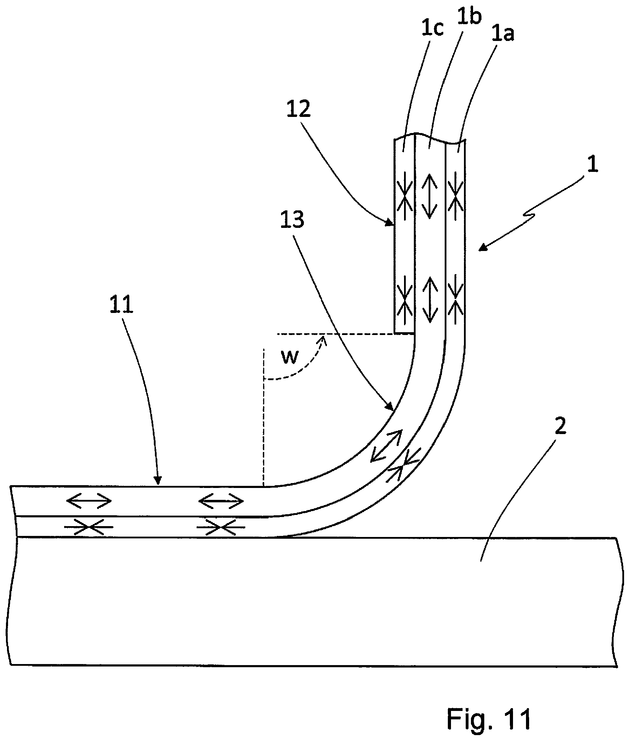

Fig. 11 zeigt im Detail einen Querschnitt um den Scharnierabschnitt 13 des Mikroelements 1. Daraus geht der Schichtaufbau des Mikroelements 1 hervor, welcher eine zuunterst angeordnete druckverspannte Schicht 1a aufweist sowie eine zugverspannte Schicht 1b. Die Wirkung dieser Eigenspannungen besteht in der dargestellten Krümmung des Mikroelements 1 entlang seines Scharnierabschnitts 13 um den Aufrollwinkel w. Entlang des Befestigungsabschnitts 11 wird diese Krümmung durch die formschlüssige Verbindung zur Grundplatte 2 verhindert und entlang des Blattabschnitts 12 sorgt die druckverspannte Kompensationsschicht 1c dafür, dass die globale, das heißt effektiv wirksame, Eigenspannung im Blattabschnitts 12 verschwindet und dort somit keine Krümmung auftritt. Die Größe des Aufrollwinkel w kann erfindungsgemäß durch die Breite des Scharnierabschnitts 13 beeinflusst werden. Eine Variation in der Breite der Scharnierabschnitte 13 unter den das Spiegel-Shutter-Array konstituierenden Mikroelementen 1 führt folglich zu einer Variation des Aufrollwinkels w in jeder geöffneten Stellung der Mikroelemente 1, wodurch die Entstehung von störenden Geisterbildern im reflektierten Lichteindruck vermieden werden kann.

Die Erfindung beschränkt sich in ihrer Ausführung nicht auf das vorstehend angegebene bevorzugte Ausführungsbeispiel. Vielmehr ist eine Anzahl von Varianten denkbar, welche von der dargestellten Lösung auch bei grundsätzlich anders gearteten Ausführungen Gebrauch macht.

## Patentansprüche

1. Spiegel-Shutter-Array (100) umfassend eine Mehrzahl von Mikroelementen (1), welche als Mikrospiegel und/oder als Mikroshutter ausgebildet sind, wobei jedes Mikroelement (1) einen lichtundurchlässigen Flächenkörper aufweist, welcher mittels eines randseitigen Befestigungsabschnitts (11) scharnierartig auf einer lichtdurchlässigen Grundplatte (2) des Spiegel-Shutter-Arrays (100) angeordnet ist, derart, dass jedes Mikroelement (1) zwischen einer lichtundurchlässigen geschlossenen Stellung und wenigstens einer lichtdurchlässigen geöffneten Stellung schwenkbar ist, wobei die Mikroelemente (1) jeweils einen Schichtaufbau aufweisen, welcher wenigstens eine druckverspannte Schicht (1a) und eine zugverspannte Schicht (1b) umfasst, wobei entlang eines Blattabschnitts (12) jedes Mikroelements (1) eine druckverspannte Kompensationsschicht (1c) auf der zugverspannten Schicht (1b) angeordnet ist, derart, dass jedes Mikroelement (1) in die folgenden Abschnitte unterteilt ist:
- den Blattabschnitt (12), welcher global spannungsfrei ausgebildet ist und zwei im Wesentlichen planparallele Oberflächen aufweist,
- den randseitigen Befestigungsabschnitt (11), welcher starr auf der Grundplatte (2) des Spiegel-Shutter-Arrays (100) angeordnet ist, und
- einen dazwischenliegenden Scharnierabschnitt (13), welcher eine eigenspannungsinduzierte Krümmung aufweist, wodurch eine geöffnete Stellung des Mikroelements (1) gebildet ist,
**dadurch gekennzeichnet,**
**dass** die Gesamtheit der Mikroelemente (1) in der jeweils geschlossenen Stellung ein irreguläres oder unstrukturiertes Gitter bildet, und wobei die Breite der Scharnierabschnitte (13) unterschiedlicher Mikroelemente (1) variiert, so dass ein Aufrollwinkel (w) der Scharnierabschnitte (13) in der wenigstens einen geöffneten Stellung der Mikroelemente (1) variiert.

2. Spiegel-Shutter-Array (100) nach Anspruch 1,
**dadurch gekennzeichnet,**
**dass** die Gesamtheit der Mikroelemente (1) in der jeweils geschlossenen Stellung ein asymmetrisches Gitter bildet.

3. Spiegel-Shutter-Array (100) nach Anspruch 1 oder 2,
**dadurch gekennzeichnet,**
**dass** die Mikroelemente (1) in der geschlossenen Stellung jeweils eine unregelmäßige polygonale Kontur aufweisen.

4. Spiegel-Shutter-Array (100) nach Anspruch 3,
**dadurch gekennzeichnet,**
**dass** die Anzahl der Seiten der polygonalen Konturen der Mikroelemente (1) zwischen 3 und 8 beträgt.

5. Spiegel-Shutter-Array (100) nach Anspruch 1 oder 2,
**dadurch gekennzeichnet,**
**dass** die Mikroelemente (1) in der geschlossenen Stellung jeweils eine Kontur aus wenigstens abschnittsweise gekrümmten Linien aufweisen.

6. Spiegel-Shutter-Array (100) nach einem der vorgenannten Ansprüche,
**dadurch gekennzeichnet,**
**dass** das Spiegel-Shutter-Array (100) Aktuierungsmittel (3) zum Schwenken der Mikroelemente (1) zwischen der wenigstens einen geöffneten Stellung und der geschlossenen Stellung aufweist, wobei mittels der Aktuierungsmittel (3) einzelne Mikroelemente (1) und/oder Gruppen von Mikroelementen (1) aktuierbar sind.

7. Spiegel-Shutter-Array (100) nach Anspruch 6,
**dadurch gekennzeichnet,**
**dass** die Gesamtheit der Mikroelemente (1) eine kreisförmige oder elliptische oder polygonale Gestalt oder eine Freiform ausbildet, wobei mittels der Aktuierungsmittel (3) ringabschnittsförmige Gruppen von Mikroelementen (1) aktuierbar sind.

8. Spiegel-Shutter-Array (100) nach Anspruch 6 oder 7,
**dadurch gekennzeichnet,**
**dass** die Aktuierungsmittel (3) ein elektrostatisches Wirkprinzip konstituieren, wozu die Grundplatte (2) des Spiegel-Shutter-Arrays (100) ein elektrisch leitfähiges Material aufweist und die Mikroelemente (1) Elektroden aufweisen oder bilden, wobei die Aktuierungsmittel (3) eine steuerbare Spannungsquelle (31) zum Anlegen von elektrischen Spannungssignalen zwischen der Grundplatte (2) und den Elektroden umfassen.

9. Spiegel-Shutter-Array (100) nach Anspruch 8,
**dadurch gekennzeichnet,**
**dass** die Grundplatte (2) eine Mehrzahl von untereinander elektrisch isolierten Grundplattensegmenten (2a, 2b, 2c) aufweist und die Elektroden elektrisch zusammengeschlossen sind zu einer Mehrzahl von untereinander elektrisch isolierten Feldern (10a, 10b, 10c, 10d, 10e), wobei die Grundplattensegmente (2a, 2b, 2c) und die Felder (10a, 10b, 10c, 10d, 10e) jeweils einzeln mit der Spannungsquelle (31) elektrisch verbunden sind.

10. Spiegel-Shutter-Array (100) nach Anspruch 3 oder 4,
**dadurch gekennzeichnet,**
**dass** der Scharnierabschnitt (11b) einen Krümmungsradius aufweist, welcher ein Hundertstel bis ein Drittel der Länge der längsten Seite der Kontur des jeweiligen Mikroelements (1) beträgt.

11. Spiegel-Shutter-Array (100) nach einem der vorgenannten Ansprüche,
**dadurch gekennzeichnet,**
**dass** der Blattabschnitt (12) in einer maximal geöffneten Stellung des jeweiligen Mikroelements (1) im Wesentlichen orthogonal zur Grundplatte (2) ausgerichtet ist.

12. Spiegel-Shutter-Array (100) nach Anspruch 8 oder 9,
**dadurch gekennzeichnet,**
**dass** der Schichtaufbau jedes Mikroelements (1) wenigstens eine elektrisch leitfähige Schicht aufweist, wodurch jeweils die Elektrode gebildet ist.

13. Spiegel-Shutter-Array (100) nach einem der vorgenannten Ansprüche,
**dadurch gekennzeichnet,**
**dass** die Grundplatte (2) einen Schichtaufbau aufweist, welcher eine lichtdurchlässige, elektrisch leitfähige Bodenschicht (21) und eine lichtdurchlässige, elektrisch isolierende Isolationsschicht (22) umfasst, wobei der Befestigungsabschnitt (12) jedes Mikroelements (1) auf der Isolationsschicht (22) angeordnet ist.

14. Spiegel-Shutter-Array (100) nach Anspruch 3 oder 4,
**dadurch gekennzeichnet,**
**dass** die Seiten der Konturen der Mikroelemente (1) eine Länge von 1 Mikrometer bis 2 Millimeter aufweisen.

## Claims

1. A mirror shutter array (100) comprising a plurality of microelements (1) that are configured as micromirrors and/or as microshutters, wherein each microelement (1) has an opaque planar body that is arranged in the manner of a hinge on a transparent base panel (2) of the mirror shutter array (100) by means of a marginal fastening section (11) such that every microelement (1) is pivotable between a light impermeable closed position and at least one light permeable open position, wherein the microelements (1) each have a layered structure that comprises at least a compressive-stressed layer (1a) and a tensile-stressed layer (1b), with a compressive-stressed compensation layer (1c) being arranged on the tensile-stressed layer (1b) along a sheet section (12) of each microelement (1) such that every microelement (1) is divided into the following sections:
- the sheet section (12) that is globally stress-free and has two substantially plane parallel surfaces;
- the marginal fastening section (11) that is rigidly arranged on the base panel (2) of the mirror shutter array (100); and
- a hinge section (13) disposed therebetween that has a curvature induced by residual stress, whereby an open position of the microplate element (1) is formed,
**characterized in that**
the totality of the microelements (1) forms an irregular or unstructured grid in the respective closed position and with the width of the hinge sections (13) of different microelements (1) varying such that a curling angle (w) of the hinge sections (13) varies in the at least one open position of the microelements (1).

2. A mirror shutter array (100) in accordance with claim 1,
**characterized in that**
the totality of the microelements (1) forms an asymmetrical grid in the respective closed position.

3. A mirror shutter array (100) in accordance with claim 1 or claim 2,
**characterized in that**
the microelements (1) each have an irregular polygonal contour in the closed position.

4. A mirror shutter array (100) in accordance with claim 3,
**characterized in that**
the number of sides of the polygonal contours of the microelements (1) lies between 3 and 8.

5. A mirror shutter array (100) in accordance with claim 1 or claim 2,
**characterized in that**
the microelements (1) each have a contour of at least partially curved lines in the closed position.

6. A mirror shutter array (100) in accordance with one of the preceding claims,
**characterized in that**
the mirror shutter array (100) has actuation means (3) to pivot the microelements (1) between the at least one open position and the closed position, with individual microelements (1) and/or groups of microelements (1) being actuable by the actuation means (3).

7. A mirror shutter array (100) in accordance with claim 6,
**characterized in that**
the totality of the microelements (1) forms a circular or elliptical or polygonal form or have a freeform, with groups of microelements (1) of annular section shape being actuable by the actuation means (3).

8. A mirror shutter array (100) in accordance with claim 6 or claim 7,
**characterized in that**
the actuation means (3) constitute an electrostatic principle of action, for which purpose the base panel (2) of the mirror shutter array (100) has an electrically conductive material and the microelements (1) have or form electrodes, with the actuation means (3) comprising a controllable voltage source (31) to apply electrical voltage signals between the base panel (2) and the electrodes.

9. A mirror shutter array (100) in accordance with claim 8,
**characterized in that**
the base panel (2) has a plurality of base panel segments (2a, 2b, 2c) electrically insulated from one another; and **in that** the electrodes are electrically combined to form a plurality of fields (10a, 10b, 10c, 10d, 10e) electrically insulated from one another, with the base panel segments (2a, 2b, 2c) and the fields (10a, 10b, 10c, 10d, 10e) each being individually electrically connected to the voltage source (31).

10. A mirror shutter array (100) in accordance with claim 3 or claim 4,
**characterized in that**
the hinge section (13) has a curvature radius that amounts to a hundredth up to a third of the length of the longest side of the contour of the respective microelement (1).

11. A mirror shutter array (100) in accordance with one of the preceding claims
**characterized in that**
the sheet section (12) is substantially orthogonally aligned with the base panel (2) in a maximum open position of the respective microelement (1).

12. A mirror shutter array (100) in accordance with claim 8 or claim 9,
**characterized in that**
the layered structure of each microelement (1) has at least one electrically conductive layer, whereby the electrode is respectively formed.

13. A mirror shutter array (100) in accordance with one of the preceding claims,
**characterized in that**
the base panel (2) has a layered structure that comprises a transparent, electrically conductive base layer (21) and a transparent, electrically insulating insulation layer (22), with the fastening section (12) of each microelement (1) being arranged on the insulation layer (22).

14. A mirror shutter array (100) in accordance with claim 3 or claim 4,
**characterized in that**
the sides of the contours of the microelements (1) have a length of 1 micrometer up to 2 millimeters.

## Revendications

1. Ensemble obturateur miroir (100) comprenant une pluralité de microéléments (1) qui sont réalisés sous la forme de micromiroirs et/ou de micro-obturateurs, chaque microélément (1) présentant un corps plat opaque qui est disposé à la manière d'une charnière sur une plaque de base (2) transparente de l'ensemble obturateur miroir (100) au moyen d'une partie de fixation (11)marginale, de telle manière que chaque microélément (1) peut être pivoté entre une position fermée ne laissant pas passer la lumière et au moins une position ouverte laissant passer la lumière, les microéléments (1) présentant respectivement une structure en couches qui comprend au moins une couche mise en contrainte de compression (1a) et une couche mise en contrainte de tension (1b), une couche de compensation mise en contrainte de compression (1c) étant disposée sur la couche mise en contrainte de tension (1b) le long d'une partie formant feuille (12) de chaque microélément (1), de telle manière que chaque microélément (1) est divisé en les parties suivantes :
- la partie formant feuille (12), qui est réalisée globalement sans contrainte et qui présente deux surfaces essentiellement plan-parallèles,
- la partie de fixation (11) marginale, qui est disposée rigidement sur la plaque de base (2) de l'ensemble obturateur miroir (100), et
- une partie charnière (13) située entre les deux, qui présente une courbure induite par contrainte résiduelle, moyennant quoi une position ouverte du microélément (1) est formée,
**caractérisé en ce que**
la totalité des microéléments (1) dans la position respectivement fermée forme une grille irrégulière ou non structurée et dans lequel la largeur des parties charnières (13) de différents microéléments (1) varie de sorte qu'un angle d'enroulement (w) des parties charnières (13) varie dans l'au moins une position ouverte des microéléments (1).

2. Ensemble obturateur miroir (100) selon la revendication 1,
**caractérisé en ce que**
la totalité des microéléments (1) dans la position respectivement fermée forme une grille asymétrique.

3. Ensemble obturateur miroir (100) selon la revendication 1 ou 2,
**caractérisé en ce que**
les microéléments (1) dans la position fermée présentent chacun un contour polygonal irrégulier.

4. Ensemble obturateur miroir (100) selon la revendication 3,
**caractérisé en ce que**
le nombre de côtés des contours polygonaux des microéléments (1) est compris entre 3 et 8.

5. Ensemble obturateur miroir (100) selon la revendication 1 ou 2,
**caractérisé en ce que**
les microéléments (1) dans la position fermée présentent chacun un contour en lignes courbes au moins sur certaines parties.

6. Ensemble obturateur miroir (100) selon l'une des revendications précédentes,
**caractérisé en ce que**
l'ensemble obturateur miroir (100) présente des moyens d'actionnement (3) destinés à pivoter les microéléments (1) entre l'au moins une position ouverte et la position fermée, des microéléments (1) individuels et/ou des groupes de microéléments (1) pouvant être actionnés par les moyens d'actionnement (3).

7. Ensemble obturateur miroir (100) selon la revendication 6,
**caractérisé en ce que**
la totalité des microéléments (1) constitue une forme circulaire ou elliptique ou polygonale ou une forme libre, des groupes en forme de segment d'anneau de microéléments (1) pouvant être actionnés par les moyens d'actionnement (3).

8. Ensemble obturateur miroir (100) selon la revendication 6 ou 7,
**caractérisé en ce que**
les moyens d'actionnement (3) constituent un mode d'action électrostatique, pour lequel la plaque de base (2) de l'ensemble obturateur miroir (100) présente un matériau électriquement conducteur et les microéléments (1) présentent ou forment des électrodes, les moyens d'actionnement (3) comprenant une source de tension (31) apte à être commandée pour appliquer des signaux de tension électriques entre la plaque de base (2) et les électrodes.

9. Ensemble obturateur miroir (100) selon la revendication 8,
**caractérisé en ce que**
la plaque de base (2) présente une pluralité de segments de plaque de base (2a, 2b, 2c) isolés électriquement les uns des autres et les électrodes sont regroupées électriquement en une pluralité de champs (10a, 10b, 10c, 10d, 10e) isolés électriquement les uns des autres, les segments de plaque de base (2a, 2b, 2c) et les champs (10a, 10b, 10c, 10d, 10e) étant chacun individuellement reliés électriquement à la source de tension (31).

10. Ensemble obturateur miroir (100) selon la revendication 3 ou 4,
**caractérisé en ce que**
la partie charnière (13) présente un rayon de courbure qui est de un centième à un tiers de la longueur du côté le plus long du contour du microélément (1) respectif.

11. Ensemble obturateur miroir (100) selon l'une des revendications précédentes,
**caractérisé en ce que**,
dans une position ouverte au maximum du microélément (1) respectif, la partie formant feuille (12) est orientée essentiellement perpendiculairement à la plaque de base (2).

12. Ensemble obturateur miroir (100) selon la revendication 8 ou 9,
**caractérisé en ce que**
la structure en couches de chaque microélément (1) présente au moins une couche électriquement conductrice, par laquelle l'électrode est respectivement formée.

13. Ensemble obturateur miroir (100) selon l'une des revendications précédentes,
**caractérisé en ce que**
la plaque de base (2) présente une structure en couches qui comprend une couche de fond (21) électriquement conductrice et transparente et une couche d'isolation (22) électriquement isolante et transparente, la partie de fixation (12) de chaque microélément (1) étant disposée sur la couche d'isolation (22).

14. Ensemble obturateur miroir (100) selon la revendication 3 ou 4,
**caractérisé en ce que**
les côtés des contours des microéléments (1) présentent une longueur de 1 micromètre à 2 millimètres.
